# FASCICULE DE BREVET EUROPEEN

(11) **EP 4 087 663 B1**
(45) Date de publication et mention de la délivrance du brevet: **23.07.2025**
(21) Numéro de dépôt: 20819763.2
(22) Date de dépôt: 09.12.2020
(51) Int. Cl.: A62B 7/14, A62B 9/00, B64D 13/00

(54) **APPAREIL DE FOURNITURE D'OXYGÈNE À UN UTILISATEUR DE VÉHICULE ET VÉHICULE COMPRENANT UN TEL APPAREIL**
GERÄT ZUM VERSORGEN EINES BENUTZERS EINES FAHRZEUGS MIT SAUERSTOFF UND FAHRZEUG MIT EINEM SOLCHEN GERÄT
APPARATUS FOR SUPPLYING OXYGEN TO A USER OF A VEHICLE, AND VEHICLE COMPRISING SUCH AN APPARATUS

(30) Priorité: 09.01.2020 FR 2000148
(43) Date de publication de la demande: 16.11.2022
(73) Titulaire: L'AIR LIQUIDE, SOCIETE ANONYME POUR L'ETUDE ET L'EXPLOITATION DES PROCEDES GEORGES CLAUDE, 75321 Paris (FR)
(72) Inventeur: CAZENAVE, Jean-Michel, 38360 SASSENAGE (FR); VILLARD, Loïc, 38360 SASSENAGE (FR)
(74) Mandataire: Germain Maureau
(86) Numéro de dépôt international: PCT/EP2020/085187
(87) Numéro de publication internationale: WO 2021/139947

(56) Documents cités:
- US-A- 3 572 331
- US-A1- 2018 126 194

## Description

L'invention concerne un appareil de fourniture d'oxygène à un utilisateur de véhicule ainsi qu'un véhicule comprenant un tel appareil.

L'invention concerne plus particulièrement un appareil de fourniture d'oxygène à un utilisateur de véhicule, notamment un pilote d'aéronef, comprenant une source de gaz respiratoire sous pression comprenant de l'air enrichi en oxygène, un organe de régulation de débit et/ou de pression et au moins un masque prévu pour alimenter en gaz les voies respiratoires dudit utilisateur, l'organe de régulation comprenant au moins une entrée raccordée à la source et au moins une sortie raccordée au masque, l'organe de régulation étant configuré pour réguler le débit et/ou la pression du gaz respiratoire fourni au masque selon la demande respiratoire de l'utilisateur, l'appareil comprenant au moins un capteur mesurant la pression et/ou le débit de gaz respiratoire délivré par l'organe de régulation vers le masque.

Les pilotes d'avions militaires sont alimentés en air enrichi en oxygène via des masques. Ces pilotes peuvent être sujets à différentes défaillances physiologiques telles que : hypoxie, hypocapnie, hypercapnie. Une difficulté est d'arriver à détecter et à prévenir l'arrivée de ces épisodes.

L'hypocapnie (insuffisance en dioxyde de carbone, c'est-à-dire diminution de la pression partielle de CO2 dans l'organisme) est très souvent, au moins en partie, responsable des malaises. Le risque d'hypocapnie existe chaque fois que la quantité de dioxyde de carbone rejetée par les poumons (lors de la phase d'expiration) est supérieure à la quantité de CO2 produite par le métabolisme. Ceci peut se produire du fait du mal des transports (même pour les pilotes expérimentés), de l'anxiété (voire la peur), de l'hypoxie (insuffisance en oxygène dans l'organisme), de l'inhalateur d'oxygène lui-même (de par sa résistance à l'inspiration en cas de forte demande inspiratoire).

Une solution connue consiste à prévoir un capteur de dioxyde de carbone afin de mesurer sa teneur dans les gaz exhalés. Cette solution est cependant difficile à mettre en œuvre et ne permet pas de remédier ou de prévenir les problèmes rencontrés.

Un appareil de fourniture d'oxygène connu est divulgué dans le document US 2018/126194 A1.

Un but de la présente invention est de pallier tout ou partie des inconvénients de l'art antérieur relevés ci-dessus.

A cette fin, l'appareil selon l'invention, par ailleurs conforme à la définition générique qu'en donne le préambule ci-dessus, est essentiellement caractérisé en ce que l'appareil comprend un organe électronique de stockage et de traitement de données configuré pour recevoir les mesures du au moins un capteur et pour calculer à partir de ces mesures, la fréquence des flux de gaz fournis au masque et correspondant à la fréquence de respiration de l'utilisateur, comparer cette fréquence calculée avec une fréquence seuil à partir de laquelle il y a un risque d'hypocapnie et, lorsque cette fréquence calculée est supérieure à la fréquence seuil, générer un signal d'avertissement sonore et/ou visuel et/ou vibratoire.

Par ailleurs, des modes de réalisation de l'invention peuvent comporter l'une ou plusieurs des caractéristiques suivantes :
- le au moins un capteur comprend un capteur de pression mesurant la pression de gaz respiratoire délivré par l'organe de régulation, l'organe électronique de stockage et de traitement de données étant configuré pour calculer la fréquence des flux de gaz respiratoire fournis au masque en détectant les dépressions déterminées successives dans les flux de gaz respiratoire fournis au masque à partir de la mesure de pression du capteur de pression, l'organe électronique de stockage et de traitement de données étant en outre configuré pour calculer la fréquence des flux de gaz respiratoire fournis au masque en mesurant la fréquence desdites dépressions déterminées,
- le au moins un capteur comprend un capteur de débit mesurant le débit de gaz respiratoire délivré par l'organe de régulation, l'organe électronique de stockage et de traitement de données étant configuré pour calculer la fréquence des flux de gaz respiratoire fournis au masque en détectant les variations déterminées successives de débit des flux de gaz respiratoire fournis au masque à partir de la mesure de débit du capteur de débit, l'organe électronique de stockage et de traitement de données étant en outre configuré pour calculer la fréquence des flux de gaz respiratoire fournis au masque en mesurant la fréquence desdites variations de débit déterminées,

- selon l'invention, l'appareil comprend un afficheur relié à l'organe électronique de stockage et de traitement de données, l'organe électronique de stockage et de traitement de données commandant l'affichage d'un signal d'alerte lorsque ladite fréquence calculée est supérieure à la fréquence seuil, qui est le seuil à partir de laquelle il y a un risque d'hypocapnie
- l'organe électronique de stockage et de traitement de données est configuré pour commander l'affichage d'un signal de bon fonctionnement lorsque la différence entre la fréquence calculée et la fréquence seuil est inférieure à une valeur déterminée,
- selon l'invention, l'organe électronique de stockage et de traitement de données est configuré pour commander l'affichage ou l'émission sonore d'un signal périodique ayant une fréquence correspondant à une fréquence cible, qui est une fréquence inférieure ou égale à la fréquence seuil,
- l'organe électronique de stockage et de traitement de données est configuré pour permettre la modification manuelle ou automatique de la valeur de la fréquence seuil,
- la valeur de la fréquence seuil est modifiée en fonction de l'un au moins parmi : l'identité de l'utilisateur, la physiologie de l'utilisateur, l'altitude de vol du véhicule, d'un facteur de charge subit par l'utilisateur et inhérent aux manœuvres du véhicule, la phase de déplacement du véhicule notamment décollage, croisière, atterrissage pour un véhicule volant), la nature du trajet véhicule, la vitesse du véhicule,
- la valeur de la fréquence seuil est sélectionnée parmi une pluralité de fréquences seuil prédéterminées prédéfinies,
- le au moins un capteur est situé au niveau de l'organe de régulation et/ou au niveau du masque,
- l'organe de régulation de débit et de pression comprend une valve à la demande mécanique ou électromécanique.

L'invention concerne également un véhicule, notamment aéronef comprenant un appareil selon l'une quelconque des caractéristiques ci-dessus ou ci-dessous

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant un exemple de réalisation possible de la structure et du fonctionnement d'un appareil selon l'invention,
[Fig. 2] représente une vue schématique et partielle illustrant un exemple de fonctionnement possible d'un appareil selon l'invention.

L'appareil 1 de fourniture d'oxygène à un utilisateur de véhicule, notamment un pilote d'aéronef, illustré comprend un circuit muni d'une source 2, 3 d'oxygène sous pression (oxygène pur ou air enrichi en oxygène), un organe 4 de régulation de débit et/ou de pression d'oxygène et au moins un masque 5 prévu pour alimenter en oxygène les voies respiratoires dudit utilisateur.

La source peut comprendre un ou plusieurs réservoirs 2, 3 d'oxygène gazeux sous pression et/ou toute autre source appropriée.

L'organe 4 de régulation peut comporter une valve à la demande mécanique ou électromécanique ou tout autre dispositif approprié par exemple, l'organe de régulation peut comporter une vanne telle que décrite dans l'un des documents suivants : EP0499505A1, EP0278861A1 ou FR2894562 A1.

L'organe 4 de régulation comprend au moins une entrée raccordée à la ou les sources 2, 3 d'oxygène sous pression et au moins une sortie raccordée au masque 5.

L'organe 4 de régulation est configuré pour réguler le débit et/ou la pression d'oxygène fourni au masque 5 provenant de la source 2, 3 selon la demande respiratoire de l'utilisateur 7.

C'est-à-dire que l'organe de régulation est de préférence une vanne du type « à la demande » c'est-à-dire délivrant un flux d'oxygène en réponse à une inspiration de l'utilisateur 7. C'est-à-dire que c'est l'action d'inspirer, effectuée par l'utilisateur, qui commande le débit en air enrichi en oxygène. La régulation est effectuée au sein du régulateur 4.

L'appareil 1 comprend en outre au moins un capteur 8, 9 mesurant la pression et/ou le débit d'oxygène délivré par l'organe 4 de régulation vers le masque 5 et un organe 6 électronique de stockage et de traitement de données. Cet organe 6 électronique peut comprendre en particulier un microprocesseur, un ordinateur, un calculateur ou tout autre système approprié. L'organe 6 électronique est configuré (par exemple relié et programmé) pour recevoir les mesures du au moins un capteur 8, 9 et pour calculer 13, à partir de ces mesures, la fréquence des flux d'oxygène fournis au masque 5 et correspondant à la fréquence de respiration de l'utilisateur, comparer 14 cette fréquence calculée avec une fréquence seuil déterminée et, lorsque cette fréquence calculée est supérieure à la fréquence seuil, générer un signal 10 d'avertissement sonore et/ou visuel et/ou vibratoire.

Cette solution simple et efficace pour prévenir l'hypocapnie consiste donc à informer l'utilisateur (pilote) lorsque son rythme respiratoire augmente de façon anormale. Comme décrit plus en détail ci-après, avantageusement, l'appareil 1 peut éventuellement lui proposer une solution afin de réguler cette fréquence respiratoire.

Le au moins capteur comprend par exemple un capteur 8 de pression mesurant la pression d'oxygène délivrée par l'organe 4 de régulation. L'organe 6 électronique est configuré pour calculer la fréquence des flux d'oxygène fournis au masque 5 en détectant les dépressions déterminées successives dans les flux d'oxygène fournis au masque 5 à partir de la mesure de pression du capteur 8 de pression (dépressions dans le circuit causées par les inhalations de l'utilisateur). L'organe 6 électronique de stockage et de traitement de données peut être configuré pour calculer la fréquence des flux d'oxygène fournis au masque 5 en mesurant la fréquence desdites dépression déterminées.

En mesurant le temps entre deux dépressions (c'est-à-dire entre deux inspirations) on obtient la fréquence respiratoire. Une fois cette valeur obtenue, elle peut être comparée un à seuil prédéfini et, en cas de dépassement, une alarme est déclenchée (un voyant 10 lumineux par exemple).

Ainsi, l'organe 6 électronique peut réaliser un comptage des inspirations détectées (pour déterminer la fréquence respiratoire) et utiliser un comparateur numérique (pour comparer la fréquence respiratoire à la fréquence seuil prédéfinie).

Alternativement le capteur peut être un capteur 9 de débit mesurant le débit d'oxygène délivré par l'organe 4 de régulation. L'organe 6 électronique de stockage et de traitement de données peut être configuré pour calculer la fréquence des flux d'oxygène fournis au masque 5 en détectant les variations déterminées successives de débit des flux d'oxygène fournis au masque 5 à partir de la mesure de débit du capteur 9 de débit. Comme précédemment, l'organe 6 électronique de stockage et de traitement de données est en outre configuré pour calculer la fréquence des flux d'oxygène fournis au masque 5 en mesurant la fréquence desdites variations de débit déterminées. Généralement, un capteur 9 de débit est prévu notamment pour détecter une éventuelle anomalie ou panne. En effet, un débit nul indique que l'utilisateur 7 ne respire pas ou qu'il y a rupture de l'alimentation en gaz. Une panne du régulateur 4 peut également être détectée si le débit détecté est trop faible ou trop important par rapport à des consignes limites. Une mauvaise étanchéité en aval du régulateur 4 peut également être détectée (en cas de fuite au niveau du masque 5 par exemple : débit trop important).

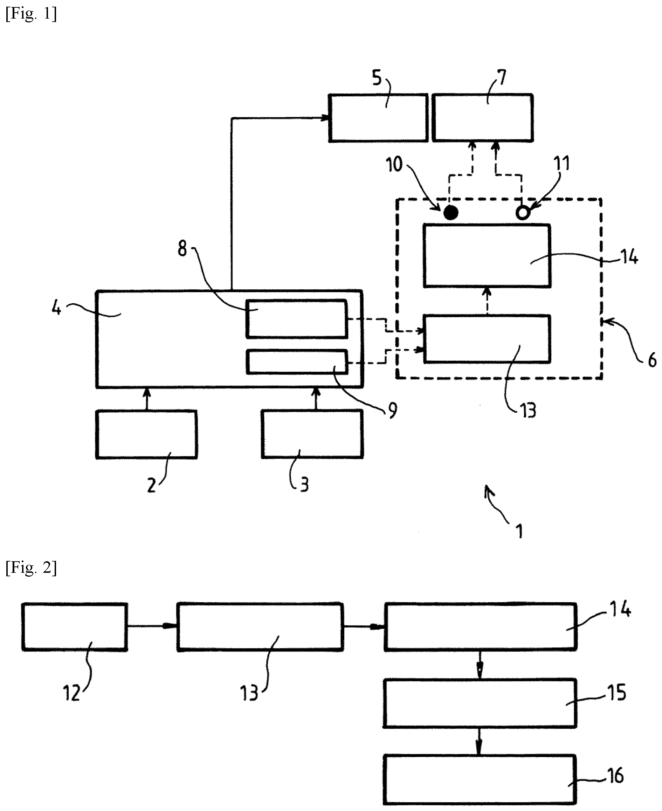

Comme illustré à la [Fig. 1], l'appareil peut comporter à la fois un capteur 8 de pression et un capteur 9 de débit. Le calcul de la fréquence des flux d'oxygène fourni au masque 5 peut être basée sur les mesures de l'un ou des deux capteurs.

L'organe 6 électronique peut être configuré pour commander l'affichage d'un signal de bon fonctionnement (lumière verte par exemple) lorsque la différence entre la fréquence calculée et la fréquence seuil est inférieure à une valeur déterminée. L'appareil 1 peut comporter un afficheur dédié à cette information de fréquence respiratoire ou peut utiliser un afficheur (diode, écran ou autre) déjà présent tel qu'un voyant lumineux qui permet d'alerter lorsque le débit mesuré présente une anomalie (« non débit » ou « plein débit »).

Ainsi, la mesure du rythme respiratoire (à partir de la mesure du débit inspiré et/ou de pression) permet de détecter l'hyperventilation et ainsi prévenir le risque d'hypocapnie. Cette mesure est ensuite comparée à un seuil préalablement défini et en cas de dépassement, une alarme est signalée à l'utilisateur. Ce dernier, une fois informé, peut donc se concentrer sur sa respiration pour retrouver un rythme respiratoire « normal » et ainsi éviter d'être sujet à l'hypocapnie.

Pour aider le pilote à diminuer son rythme respiratoire, l'appareil 1 peut comporter une fonctionnalité supplémentaire. Par exemple, l'organe 6 électronique peut être configuré pour commander l'affichage ou l'émission sonore ou vibratoire d'un signal périodique ayant une fréquence correspondant à une fréquence cible.

Cette fréquence cible peut être une valeur de référence qui peut être distincte de la fréquence seuil (notamment inférieure ou égale à la fréquence seuil). La fréquence seuil étant la valeur limite à partir de laquelle il y a risque d'hypocapnie.

Ainsi, afin d'aider l'utilisateur 7, un second voyant 11 peut clignoter à une fréquence égale (ou un avertisseur sonore pour émettre des sons) à la fréquence respiratoire cible qu'il doit atteindre. Ceci permet à l'utilisateur de modifier de lui-même sa fréquence respiratoire.

Comme schématisé à la [Fig. 2], l'appareil peut donc réaliser les étapes suivantes : mesure 12 d'une dépression et/ou variation de débit, calcul 13 de la fréquence de respiration correspondante, comparaison 15 de cette fréquence calculée avec une fréquence seuil prédéfinie, et génération 16 d'un signal d'aide pour aider l'utilisateur à tendre vers la fréquence cible. Cette solution simple, facile à mettre en œuvre (éventuellement sur les équipements actuels ayant déjà les composants nécessaires), permet de prévenir le phénomène d'hypocapnie en anticipant son apparition et donc de diminuer fortement le nombre d'épisodes physiologiques à risque.

L'appareil 1 présente une simplicité de fonctionnement et de mise en œuvre. Il permet d'informer de manière simple l'utilisateur 7 qu'il a un rythme respiratoire trop élevé. Il peut aider le cas échéant l'utilisateur à retrouver un rythme « normal ».

Dans ces modes de réalisation possibles, la fréquence seuil pourrait être adaptée à chaque situation et/ou à chaque utilisateur, notamment aux différentes phases de vol dans le cas d'une utilisation dans un aéronef.

Par exemple, différents niveaux de fréquence seuil pourraient être envisagés (propres à chaque pilote par exemple) en fonction de l'un au moins parmi :
- de l'altitude cabine (la fréquence seuil pourrait être relativement plus importante si l'altitude augmente),
- du facteur de charge subit par l'utilisateur et inhérent aux manœuvres du véhicule,
- de la phase de vol (décollage, croisière, atterrissage, etc.) dont les paramètres facteurs de charge et altitude sont préalablement connus,
du niveau de stress et/ou de la charge mentale du pilote (qui dépend par exemple de la complexité de la mission) .Bien entendu, cette fréquence seuil pourrait être adaptée en fonction de tout autre facteur qui pourrait avoir un impact sur la physiologie du pilote.

On pourra par exemple se référer à la norme MIL-D-19326H qui donnent des coefficients de correction de la ventilation de référence utilisée pour des systèmes de fourniture d'oxygène en fonction des phases de la mission, voir du nombre de membres d'équipage.

De plus, ces niveaux de fréquence seuil pourraient être déterminés au préalable via une analyse physiologique personnalisée réalisée sur le pilote. Cette fonction supplémentaire pourrait nécessiter une interface avec le pilote afin qu'il puisse adapter la fonction à sa propre physiologie. Plusieurs solutions peuvent être envisagées. Par exemple, plusieurs "profils" prédéfinis pourraient être préenregistrés dans l'équipement, le pilote choisissant le profil le plus proche du sien (par exemple via un sélecteur tel qu'un bouton de type potentiomètre). Dans une autre solution, le pilote pourrait introduire un élément (carte électronique ou code ou autre support de données) dans l'équipement afin de s'identifier et de charger son profil (c'est-à-dire ses propres fréquences seuil). Dans les exemples ci-dessus les capteurs 8, 9 sont représentés au niveau de l'organe 4 de régulation. Bien entendu, un capteur à l'intérieur même du masque 5 ou ailleurs dans le circuit permettrait aussi de mesurer la fréquence respiratoire du pilote 7.

De plus, la communication avec le pilote 7 a été décrite dans un exemple visuel mais pourrait être différente : par vibrations par exemple, ou encore par signaux sonores (« bips » - avec une fréquence toujours calquée sur celle du rythme respiratoire souhaité).

## Revendications

1. Appareil de fourniture d'oxygène à un utilisateur de véhicule, notamment un pilote d'aéronef, comprenant une source (2, 3) de gaz respiratoire sous pression comprenant de l'air enrichi en oxygène, un organe (4) de régulation de débit et/ou de pression et au moins un masque (5) prévu pour alimenter en gaz les voies respiratoires dudit utilisateur, l'organe (4) de régulation comprenant au moins une entrée raccordée à la source (2, 3) et au moins une sortie raccordée au masque (5), l'organe (4) de régulation étant configuré pour réguler le débit et/ou la pression du gaz respiratoire fourni au masque (5) selon la demande respiratoire de l'utilisateur, l'appareil (1) comprenant au moins un capteur (8, 9) mesurant la pression et/ou le débit de gaz respiratoire délivré par l'organe (4) de régulation vers le masque (5) et un organe (6) électronique de stockage et de traitement de données configuré pour recevoir les mesures du au moins un capteur (8, 9) et pour calculer à partir de ces mesures, la fréquence des flux de gaz fournis au masque (5) et correspondant à la fréquence de respiration de l'utilisateur, comparer cette fréquence calculée avec une fréquence seuil à partir de laquelle il y a un risque d'hypocapnie et, lorsque cette fréquence calculée est supérieure à la fréquence seuil, générer un signal (10, 11) d'avertissement sonore et/ou visuel et/ou vibratoire, l'appareil comprenant un afficheur (10, 11) relié à l'organe (6) électronique de stockage et de traitement de données, l'organe (6) électronique de stockage et de traitement de données commandant l'affichage d'un signal d'alerte lorsque ladite fréquence calculée est supérieure à la fréquence seuil, **caractérisé en ce que** l'organe (6) électronique de stockage et de traitement de données est configuré pour commander l'affichage ou l'émission sonore d'un signal périodique ayant une fréquence correspondant à une fréquence cible qui est inférieure ou égale à la fréquence seuil.

2. Appareil selon la revendication 1, **caractérisé en ce que** le au moins un capteur comprend un capteur (8) de pression mesurant la pression de gaz respiratoire délivré par l'organe (4) de régulation, l'organe (6) électronique de stockage et de traitement de données étant configuré pour calculer la fréquence des flux de gaz respiratoire fournis au masque (5) en détectant les dépressions déterminées successives dans les flux de gaz respiratoire fournis au masque (5) à partir de la mesure de pression du capteur (8) de pression, l'organe (6) électronique de stockage et de traitement de données étant en outre configuré pour calculer la fréquence des flux de gaz respiratoire fournis au masque (5) en mesurant la fréquence desdites dépressions déterminées.

3. Appareil selon la revendication 1 ou 2, **caractérisé en ce que** le au moins un capteur comprend un capteur (9) de débit mesurant le débit de gaz respiratoire délivré par l'organe (4) de régulation, l'organe (6) électronique de stockage et de traitement de données étant configuré pour calculer la fréquence des flux de gaz respiratoire fournis au masque (5) en détectant les variations déterminées successives de débit des flux de gaz respiratoire fournis au masque (5) à partir de la mesure de débit du capteur (9) de débit, l'organe (6) électronique de stockage et de traitement de données étant en outre configuré pour calculer la fréquence des flux de gaz respiratoire fournis au masque (5) en mesurant la fréquence desdites variations de débit déterminées.

4. Appareil selon l'une quelconque des revendications 1 à 3, **caractérisé en ce que** l'organe (6) électronique de stockage et de traitement de données est configuré pour commander l'affichage d'un signal de bon fonctionnement lorsque la différence entre la fréquence calculée et la fréquence seuil est inférieure à une valeur déterminée.

5. Appareil selon l'une quelconque des revendications 1 à 4, **caractérisé en ce que** l'organe (6) électronique de stockage et de traitement de données est configuré pour permettre la modification manuelle ou automatique de la valeur de la fréquence seuil.

6. Appareil selon la revendication 5, **caractérisé en ce que** la valeur de la fréquence seuil est modifiée en fonction de l'un au moins parmi : l'identité de l'utilisateur, la physiologie de l'utilisateur, l'altitude de vol du véhicule, d'un facteur de charge subit par l'utilisateur et inhérent aux manœuvres du véhicule, la phase de déplacement du véhicule notamment décollage, croisière, atterrissage pour un véhicule volant), la nature du trajet véhicule, la vitesse du véhicule.

7. Appareil selon la revendication 5 ou 6, **caractérisé en ce que** la valeur de la fréquence seuil est sélectionnée parmi une pluralité de fréquences seuil prédéterminées prédéfinies.

8. Appareil selon l'une quelconque des revendications 1 à 7, **caractérisé en ce que** le au moins un capteur (8, 9) est situé au niveau de l'organe (4) de régulation et/ou au niveau du masque (5).

9. Appareil selon l'une quelconque des revendications 1 à 8, **caractérisé en ce que** l'organe (4) de régulation de débit et de pression comprend une valve à la demande mécanique ou électromécanique.

10. Véhicule, notamment aéronef comprenant un appareil selon l'une quelconque des revendications 1 à 9.

## Patentansprüche

1. Vorrichtung zur Versorgung eines Fahrzeugnutzers, insbesondere eines Flugzeugpiloten, mit Sauerstoff, umfassend eine Quelle (2, 3) für unter Druck stehendem Atemgas, die mit Sauerstoff angereicherte Luft umfasst, ein Durchfluss- und/oder Druckregulierungselement (4) und mindestens eine Maske (5), die dazu vorgesehen ist, die Atemwege des Benutzers mit Gas zu versorgen, wobei das Regulierungselement (4) mindestens einen an die Quelle (2, 3) angeschlossenen Eingang und mindestens einen an die Maske (5) angeschlossenen Ausgang umfasst, wobei das Regulierungselement (4) so eingerichtet ist, dass es den Durchfluss und/oder den Druck des der Maske (5) zugeführten Atemgases gemäß dem Atmungsbedarf des Benutzers reguliert, wobei die Vorrichtung (1) mindestens einen Sensor (8, 9), der den Druck und/oder den Durchfluss des Atemgases misst, das von dem Regulierungselement (4) zur Maske (5) geliefert wird, und ein elektronisches Datenspeicherungs- und -verarbeitungselement (6) umfasst, das so eingerichtet ist, dass es die Messungen des mindestens einen Sensors (8, 9) empfängt und aus diesen Messungen die Frequenz der der Maske (5) zugeführten Gasströme berechnet, die der Atemfrequenz des Benutzers entspricht, diese berechnete Frequenz mit einer Schwellenfrequenz vergleicht, ab der das Risiko einer Hypokapnie besteht, und, wenn diese berechnete Frequenz über der Schwellenfrequenz liegt, ein akustisches und/oder visuelles und/oder vibrierendes Warnsignal (10, 11) erzeugt, wobei die Vorrichtung ein Display (10, 11) umfasst, das mit dem elektronischen Datenspeicherungs- und - verarbeitungselement (6) verbunden ist, wobei das elektronische Datenspeicherungs- und -verarbeitungselement (6) die Anzeige eines Warnsignals steuert, wenn die berechnete Frequenz höher als die Schwellenfrequenz ist, **dadurch gekennzeichnet, dass** das elektronische Datenspeicherungs- und -verarbeitungselement (6) so eingerichtet ist, dass es die Anzeige oder die akustische Ausgabe eines periodischen Signals mit einer Frequenz steuert, die einer Zielfrequenz entspricht, die kleiner oder gleich der Schwellenfrequenz ist.

2. Vorrichtung nach Anspruch 1, **dadurch gekennzeichnet, dass** der mindestens eine Sensor einen Drucksensor (8) umfasst, der den Druck des vom Regulierungselement (4) gelieferten Atemgases misst, wobei das elektronische Datenspeicherungs- und -verarbeitungselement (6) so eingerichtet ist, dass es die Frequenz der der Maske (5) zugeführten Atemgasströme berechnet, indem es die aufeinanderfolgenden bestimmten Unterdrücke in den der Maske (5) zugeführten Atemgasströmen aus der Druckmessung des Drucksensors (8) detektiert, wobei das elektronische Datenspeicherungs- und - verarbeitungselement (6) ferner so eingerichtet ist, dass es die Frequenz der der Maske (5) zugeführten Atemgasströme berechnet, indem es die Frequenz der bestimmten Unterdrücke misst.

3. Vorrichtung nach Anspruch 1 oder 2, **dadurch gekennzeichnet, dass** der mindestens eine Sensor einen Durchflusssensor (9) umfasst, der den Durchfluss des vom Regulierungselement (4) gelieferten Atemgases misst, wobei das elektronische Datenspeicherungs- und -verarbeitungselement (6) so eingerichtet ist, dass es die Frequenz der der Maske (5) zugeführten Atemgasströme berechnet, indem es die aufeinanderfolgenden bestimmten Änderungen des Durchflusses der der Maske (5) zugeführten Atemgasströme aus der Durchflussmessung des Durchflusssensors (9) detektiert, wobei das elektronische Datenspeicherungs- und -verarbeitungselement (6) ferner so eingerichtet ist, dass es die Frequenz der der Maske (5) zugeführten Atemgasströme berechnet, indem es die Frequenz der bestimmten Durchflussänderungen misst.

4. Vorrichtung nach einem der Ansprüche 1 bis 3, **dadurch gekennzeichnet, dass** das elektronische Datenspeicherungs- und - verarbeitungselement (6) so eingerichtet ist, dass es die Anzeige eines Signals für einen ordnungsgemäßen Betrieb steuert, wenn die Differenz zwischen der berechneten Frequenz und der Schwellenfrequenz kleiner als ein bestimmter Wert ist.

5. Vorrichtung nach einem der Ansprüche 1 bis 4, **dadurch gekennzeichnet, dass** das elektronische Datenspeicherungs- und - verarbeitungselement (6) so eingerichtet ist, dass es die manuelle oder automatische Modifikation des Werts der Schwellenfrequenz ermöglicht.

6. Vorrichtung nach Anspruch 5, **dadurch gekennzeichnet, dass** der Wert der Schwellenfrequenz in Abhängigkeit von mindestens einem von Folgendem modifziert wird: Identität des Benutzers, Physiologie des Benutzers, Flughöhe des Fahrzeugs, vom Nutzer erlittener Belastungsfaktor, der mit dem Manövrieren des Fahrzeugs verbunden ist, Bewegungsphase des Fahrzeugs (insbesondere Start, Reiseflug, Landung für ein fliegendes Fahrzeug) Art der Reisestrecke, Geschwindigkeit des Fahrzeugs.

7. Vorrichtung nach Anspruch 5 oder 6, **dadurch gekennzeichnet, dass** der Wert der Schwellenfrequenz aus einer Vielzahl von vorbestimmten vordefinierten Schwellenfrequenzen ausgewählt wird.

8. Vorrichtung nach einem der Ansprüche 1 bis 7, **dadurch gekennzeichnet, dass** sich der mindestens eine Sensor (8, 9) am Regulierungselement (4) und/oder an der Maske (5) befindet.

9. Vorrichtung nach einem der Ansprüche 1 bis 8, **dadurch gekennzeichnet, dass** das Durchfluss- und Druckregulierungselement (4) ein mechanisches oder elektromechanisches Bedarfsventil umfasst.

10. Fahrzeug, insbesondere Luftfahrzeug, das eine Vorrichtung nach einem der Ansprüche 1 bis 9 umfasst.

## Claims

1. An apparatus for providing oxygen to a vehicle user, in particular an aircraft pilot, comprising a source (2, 3) of pressurized respiratory gas comprising oxygen-enriched air, a flow-regulating and/or pressure-regulating member (4), and at least one mask (5) arranged for supplying gas to the respiratory tract of said user, the regulating member (4) comprising at least one inlet connected to the source (2, 3) and at least one outlet connected to the mask (5), the regulating member (4) being configured to regulate the flow and/or the pressure of the respiratory gas supplied to the mask (5) according to the respiratory demand of the user, the apparatus (1) comprising at least one sensor (8, 9) measuring the pressure and/or the flow of respiratory gas delivered by the regulating member (4) towards the mask (5), and an electronic data storage and processing member (6) configured to receive the measurements from the at least one sensor (8, 9) and to calculate, from these measurements, the frequency of the gas flows provided to the mask (5) and corresponding to the respiratory frequency of the user, to compare this calculated frequency against a threshold frequency from which there is a risk of hypocapnia and, when this calculated frequency is greater than the threshold frequency, to generate an audible and/or visual and/or vibratory warning signal (10, 11), the apparatus comprising a display (10, 11) connected to the electronic data storage and processing member (6), the electronic data storage and processing member (6) controlling the display of a warning signal when said calculated frequency is greater than the threshold frequency, **characterized in that** the electronic data storage and processing member (6) is configured to control the display or acoustic emission of a periodic signal having a frequency corresponding to a target frequency which is less than or equal to the threshold frequency.

2. The apparatus according to claim 1, **characterized in that** the at least one sensor comprises a pressure sensor (8) measuring the pressure of respiratory gas delivered by the regulating member (4), the electronic data storage and processing member (6) being configured to calculate the frequency of the respiratory gas flows provided to the mask (5) by detecting the successive determined negative pressures in the respiratory gas flows provided to the mask (5) from the pressure measurement of the pressure sensor (8), the electronic data storage and processing member (6) being further configured to calculate the frequency of the respiratory gas flows provided to the mask (5) by measuring the frequency of said determined negative pressures.

3. The apparatus according to claim 1 or 2, **characterized in that** the at least one sensor comprises a flow sensor (9) measuring the flow of respiratory gas delivered by the regulating member (4), the electronic data storage and processing member (6) being configured to calculate the frequency of the respiratory gas flows provided to the mask (5) by detecting the successive determined variations in the flow of the respiratory gas flows provided to the mask (5) from the flow measurement of the flow sensor (9), the electronic data storage and processing member (6) being further configured to calculate the frequency of the respiratory gas flows provided to the mask (5) by measuring the frequency of said determined flow variations.

4. The apparatus according to any one of claims 1 to 3, **characterized in that** the electronic data storage and processing member (6) is configured to control the display of a signal indicative of correct operation when the difference between the calculated frequency and the threshold frequency is less than a determined value.

5. The apparatus according to any one of claims 1 to 4, **characterized in that** the electronic data storage and processing member (6) is configured to allow manual or automatic modification of the value of the threshold frequency.

6. The apparatus according to claim 5, **characterized in that** the value of the threshold frequency is modified according to at least one among: the identity of the user, the physiology of the user, the flight altitude of the vehicle, a load factor experienced by the user and inherent to the maneuvers of the vehicle, the phase of movement of the vehicle (in particular take-off, cruising and landing in the case of a flying vehicle), the nature of the vehicle path, the speed of the vehicle.

7. The apparatus according to claim 5 or 6, **characterized in that** the value of the threshold frequency is selected among a plurality of predefined predetermined threshold frequencies.

8. The apparatus according to any one of claims 1 to 7, **characterized in that** the at least one sensor (8, 9) is located at the level of the regulating member (4) and/or at the level of the mask (5).

9. The apparatus according to any one of claims 1 to 8, **characterized in that** the flow-regulating and pressure-regulating member (4) comprises a mechanical or electromechanical demand valve.

10. A vehicle, in particular an aircraft comprising an apparatus according to any one of claims 1 to 9.
